# EUROPÄISCHE PATENTANMELDUNG

(11) **EP 0 875 344 A1**
(43) Veröffentlichungstag der Anmeldung: **04.11.1998**
(21) Anmeldenummer: 97107194.9
(22) Anmeldetag: 30.04.1997
(51) Int. Cl.: B26F 1/00, B26F 1/36, G06K 1/00, B26F 1/02, B26F 1/14

(54) **Verfahren und Vorrichtung zur Entwertung und Aufbereitung von Wertkarten**

(71) Anmelder: Infanger, Rolf, 6473 Silenen/UR (CH)
(72) Erfinder: Infanger, Rolf, 6473 Silenen/UR (CH)
(74) Vertreter: Arato, Laszlo

(57) **Zusammenfassung**

Es wird ein Verfahren für die zuverlässige Entwertung von Wertkarten (1) und gleichzeitiger Aufbereitung zur Wiederverwertung vorgeschlagen. Die Wertkarte ist vorzugsweise mit einem Mikrochip (5) ausgerüstet. Für die Durchführung des Verfahrens dient eine Vorrichtung. In diese Vorrichtung gibt es eine Matrize (12) mit einem Schlitz (13), für die Aufnahme der Karte (1) und ein Stempel (7), mit mindestens einem Dorn (9) und einer Spitze (10). Die Betätigung des Stempels (7) zerstört den Mikrochip (5) mit der Spitze (10) durch mechanische Überbeanspruchung und folgender Perforierung der Wertkarte (1) in einem Arbeitszyklus.

## Beschreibung

Die Erfindung betrifft ein Verfahren, sowie eine Vorrichtung für die Durchführung des Verfahrens, zur sicheren Entwertung einer Wertkarte mit mindestens einer Datenspur und einem integrierten Mikrochip mit festgelegter Position in der Wertkarte, und zur Aufbereitung der Werkstoffe der Karte zur Wiederverwertung.

Wertkarten dienen zur Aufbewahrung von verschlüsselten und maschinen lesbaren Informationen der Identifikation und als Zahlungsmittel des modernen Zahlungsverkehrs. Sie sind als Kredit- respektive Debitkarten und als Schlüssel- und Ausweiskarten im Gebrauch. Ob in Handtelefonen oder Pay-TV-Decodern, ob als EC- oder als persönliche Netzwerkrechner, Plastikkarten haben sich auf dem Weltmarkt, mit international genormten Aussenabmessungen, einen festen Platz erobert. Weil sie praktisch, intelligent und beliebt sind, heissen sie neudeutsch 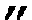 Smartcards". Die Karten sind mit öffentlich lesbaren Informationen, beispielsweise mit dem Namen des Karteninhabers versehen. Ausserdem tragen sie maschinenschreib- und lesbare Informationen beispielsweise in einen Magnetbandstreifen, die ebenfalls als öffentliche Information gelten sofern nicht verschlüsselt, da sie mit handelsüblichen Kartenlesegerät lesbar sind. Andere Mittel der Identifikation sind optische Zeichen und/oder markante, fälschungssichere Bilder wie das Hologramm. Die Intelligenz und das kryptische Potential der Karte steckt in einem Mikrochip, der zum Rechnen und zur Verschlüsselung dient, damit der vertrauliche Teil der Information chiffriert und diskret bleibt. Dank dem öffentlichen Teil der Wertkarte ist bekannt, wem die Karte gehört und dank dem globalen und dank einem individuellen Schlüssel wird vielen Karteninhabern die individuelle und sichere Kommunikation mit vielen Terminals eines gemeinsamen Netzes möglich. Diese rationelle und bequem und problemlose Kommunikation im Zahlungsverkehr, mit den Kreditkarten der neusten Generation, die in Sachen Sicherheit gut taxiert ist, hat die Banken veranlasst, die Wertkarte auch als 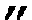 elektronische Geldbörse", wie die neue Applikation der Smartcards heisst, anzubieten und versuchsweise mit einem maximalen Wert von DM 400.- je Wertkarte zu verkaufen. Das Ergebnis der Versuche entspricht dem Trend, die Wertkarte ist im Kommen.
Die Benützung, vorallem aber die unsachgemässe Aufbewahrung der Wertkarten, schränkt die Betriebsdauer und somit die Betriebssicherheit der Wertkarten ein, so dass die Verleger generell auf der periodischen Erneuerung der Wertkarten bestehen. Eine kürzlich veröffentlichte EU-Studie lässt auch andere Gründe der periodischen Erneuerung der Wertkarten erkennen, denn sie weist das Aufkommen von bis zu 20% Piratenkarten der Pay-TV-Nutzern nach, was Millionen Euro Verlusten entspricht. Die periodische Erneuerung der Wertkarten ist die Flucht nach vorn, und bedeutet lediglich, die Ausrüstung der Neuauflage der Wertkarte mit neuen Schlüssein. Die Risiken, die mit dem Vorgang der Entsorgung der alten Wertkarte verbunden sind, trägt der Inhaber der Wertkarte. Dass diese Risiken erheblich sind, ist von Meldungen den Hacker bekannt, die nach eigenen Berichten die Mikrochips von tausenden von Smartcards bereits 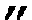 geknackt" haben, nachdem sie die Mikrochips mit Säure aus der Karte herausgelöst und unter dem Elektronenmikroskop mit Ionenstrahl und Mikronadeln gelesen haben (vgl. pl@net, 3/97, S.37 ZD-Verlag München).
Der Datenschutz wünscht, dass sich der Verleger der Wertkarten um die sichere Entwertung der Wertkarten kümmert, da es als erwiesen gilt, dass der Konsument mit den im Haushalt üblichen Mitteln, wie Scheren nur den Plastikkörper, nicht aber den darin verborgenen Mikrochip zerstören kann. Weil das unerlaubte Nachfüllen der 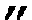 elektronischen Geldbörse" für die Banken mit katastrophalen Volgen verbunden wären, darf davon ausgegangen werden, dass die Banken und somit die Verleger von Wertkarten sich sukzessive, und noch vor dem Durchgreifen des Datenschutzes, dem Problem der Entwertung der ungültigen Wertkarten stellen werden, indem sie die entleerte 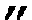 elektronischen Geldbörsen" zurückbehalten und entwerten. Die maschinelle Zerkleinerung und somit die gründliche Entwertung der Wertkarten wird bereits vom Verleger praktiziert und von der Warte des Datenschutzes als Lösung akzeptiert. Das Problem dabei ist, dass wegen den Metallteilen der Kuststoff nicht rezykliert werden kann, und dass der bei der Entwertung entstehende Müll als Elektronikmüll klassiert werden muss und die Annahme von Elektronikmüll von den Anstalten der Müllverbrennung, wegen der Gefahr von Emissionen, verweigert wird. Weil die Deponiekapazitäten in den Industriestaaten erschöpft und neue Bewilligungen im Sinne der Kreislaufwirtschaft nicht zu erwarten sind, ist die Entsorgung der Wertkarten ungelöst.

Die vorliegende Erfindung stellt sich die Aufgabe der zuverlässigen Entwertung und gleichzeitigen Aufbereitung der Wertkarten zur Wiederverwertung für die Kreislaufwirtschaft.

Die Lösung des erfindungsmässigen Verfahrens erfolgt gemäss dem Merkmal der Patentansprüche 1-3, sowie den Merkmalen der Vorrichtung zur Durchführung des Verfahrens gemäss der Patentansprüche 3-8.
Die Vorteile des erfindungsgemässen Verfahrens ist, dass sie ökonomische und ökologische Zielsetzungen vereint, weil es die zuverlässige Entwertung und die Aufbereitung zum wiederverwertbaren Material in einem einzigen Arbeitsschritt erreicht. Ein wesentlicher Vorteil ist, dass aus diesem Verfahren eine zuverlässige Entwertung resultiert, und dass die Entwertung der Wertkarte und die Aufbereitung des Materials vor den Augen des Karteninhabers geschehen kann. Ein Vorteil des Verfahrens ist ferner, dass dank dem Verfahren das Kartenmaterial bis zu 95% wiederverwendbar wird und somit der eigentliche Abfall auf ein Minimum reduziert werden kann, denn Abfall stellt sowohl eine Belastung der Umwelt als auch ein Verlust an Rohstoffen und Energie dar. Ein zusätzlicher Vorteil des Verfahrens ist, dass sie eine sanfte Technologie darstellt, die leise und im Prinzip mit einer einfachen und preiswerten Vorrichtung, und kleinen Kraft- und Energiebedarf durchführbar und darum sogar mit Handbetätigung möglich ist.

Nachfolgend wird die Erfindung gemäss einer bevorzugten Ausführungsart vorgestellt. Die Zeichnungen zeigen:
- Fig.1,: den Vorderansicht des Stempelsatzes einer Stanzvorrictung,
- Fig.2,: die Seitenansicht des Stempelsatzes der Fig.1
- Fig.3,: den Querschnitt der Stanzvorrichtung mit dem Stempelsatz gemäss Fig.1,
- Fig.4,: eine entwertete Wertkarte in Grundriss,
- Fig.5,: die Stanzvorrichtung mit Handbetätigung in Seitenansicht,
- Fig.6,: eine Ausführung der Stanzvorrichtung mit elektromechanischem Antrieb.

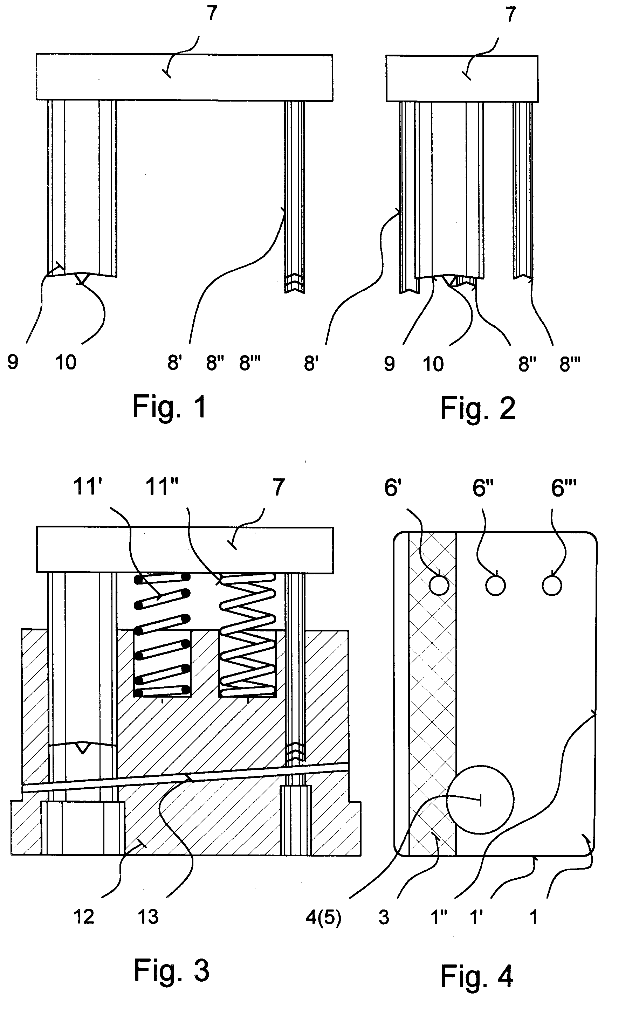

Die in der Figur 4 dargestellte Wertkarte 1 ist nach der ISO-Norm gestaltet und ist 0,86 ± 0,1 mm dick, 85,5 mm lang, entsprechend der längeren Seitenkante 1' und 54,0 mm breit, entsprechend der kürzeren Seitenkante 1'' und ist an den Ecken mit Radius 2,0 mm abgerundet. Auf der Wertkarte 1 befindet sich eine 12,5 mm breite Magnetspur 3 und im Bereich der Öffnung 4, mit Durchmesser 18 mm, ist der nichtgezeigte Mikrochip 5 integriert. Die kleineren Öffnungen 6' bis 6''' sind wesentlich kleiner als die Öffnung 4 und weisen einen Durchmesser von 5 mm auf. Die Öffnungen 4 und 6' bis 6''' sind Perforationen, die der Entwertung der Wertkarte dienen. Mit der Perforation der Öffnung 4 wird der in Kunststoff vergossene Mikroprozessor 5 und somit knapp 5 Volumenprozent der Wertkarte zu Elektronikmüll mit etwa 40% Metallanteil ausgeschieden. Die restlichen 95 Volumenprozent der Wertkarte sind wiederverwertbarer Kuststoff, der beim Prozess der Perforation mit der perforierten Wertkarte 1 und den Ausschnitte der Öffnungen anfällt.

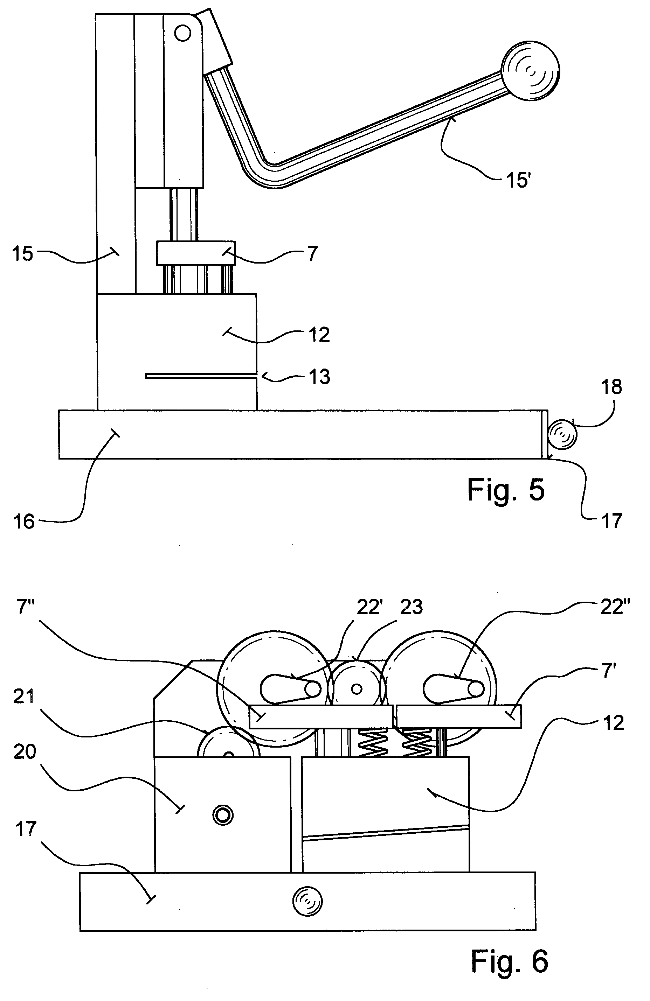

Wenn eine Werkarte 1 entsprechend der Figur 4 perforiert ist, darf mit Sicherheit die Zerstörung der Identifikationsmerkmale derselben, die im Bereich der Öffnungen 6' bis 6''' liegen, angenommen werden. Die zerstörten Identifikationscodes der Wertkarte 1 sind beispielsweise im Bereich der Öffnung 6' Magnetstreifen 3, im Bereich der Öffnung 6'' ein Hologramm und im Bereich der Öffnung 6''' sonstige alternative Daten. Mit der Perforierung der Öffnung 4, beispielsweise durch Stanzen, wird der nichtgezeigte Mikroprozessor 5 von der Wertkarte 1 entfernt. Wie oben erwähnt, bleibt er aber mit Mitteln der analytischen Elektronik lesbar und ist somit ein erhebliches finanzielles Risiko für den Karteninhaber und ein Dorn im Auge des Datenschutzes. Die Zerstörung des Mikroprozessors 5, mit dem Ausschnitt der Öffnung 4, ist durch verschiedene Techniken, beispielsweise Mahlen oder Schreddern im einem zweiten Verfahrensschritt möglich. Damit die Zerstörung des Mikrochips 5 mit der Perforierung der Wertkarte 1 in einem Arbeitsgang der Entwertung und gleichzeitigen Aufbereitung des Kartenmaterials zur Wiederverwertung möglich ist, wird gemäss der Figur 1, im Stempel 7, im Dorn 9 eine zentrale Spitz 10 eingefügt. Gemäss Figur 3 wird der Stempel 7 in die Matrize 12 gesteckt, bis diese an den Federn 11',11'' anstehen. Damit die Perforierung der Wertkarte 1 gemäss der Figur 4, durch Stanzen geschieht, wird die Wertkarte 1 (unperforiert) in den schrägen Schlitz 13 gelegt. Wenn gemäss Figur 5 das Stanzwerkzeug das aus dem Stempel 7 und aus der Matrize 12 und der Kniehebelpresse 15 besteht, durch die Betätigung des Handhebels 15' geschlossen wird, durchstossen die vorzugsweise hohlgeschliffenen Enden der Dorne 8'-8'' und 9, sowie die Spitze 10, die zu entwertende Wertkarte 1 in Serie. Entsprechend wird der Dorn 8' bei der Betätigung des Kniehhebels 15' zuerst die Wertkarte 1 passieren, gefolgt von Dorn 8'' und der Spitze 10, die den Mikroprozessor 5 treffen und so stark deformieren, dass dabei die Struktur des Mikroprozessors 5 mit überzeugender Sicherheit zerstört wird. Die geschilderte serielle Folge der Stanz- und Biegeoperationen senkt den Kraftaufwand der Betätigung massiv, so dass für die Betätigung des Stanzwerkzeuges 7,12 mit der Kniehebelpresse 15 ein Moment von 2000 Ncm, entsprechend 80 N, mit 25 cm Hebelarm ausreichend ist. Gemäss Figur 6 wird eine elektromechanische, paralelle Betätigung des Stanzwerkzeuges, mit möglicher Unterteilung des Stempels 7 in 7',7'', mit dem Elektromotor 20 und einem Stirnradgetriebe 21 vorgeschlagen, die den Exzenter 22', 22'' treiben. Bei dieser Betätigung besteht die Möglichkeit der wahlweisen gemeinsamen Betätigung der Exzenter 22'' mit dem Exzenter 22', indem beispielsweise der Verbindungsrizel 23 auf ihre Welle verschoben und somit der Antriebsritzel des Exzenters 22' und 22'' an oder entkuppelt wird.

Zur Steuerung eines elektromechanischen Wertkartenentwerters eignen sich zwei Mikroschalter. Der erste Mikroschalter kann entsprechend der Kurzseite 1' der Wertkarte 1 im Schlitz 13 so angeordnet sein, dass nach korrektem Einschieben der Wertkarte 1 ein Zyklus von Arbeitsgängen gestartet wird. Der zweite Mikroschalter kann die obere Lage des Stempels 7 überwachen und nach Erreichen der Startposition das Gerät abschalten.

## Patentansprüche

1. Verfahren zur sicheren Entwertung einer Wertkarte (1) mit Mikrochip (5) dadurch gekennzeichnet, dass die Architektur des Mikrochips (5) durch mechanische Überbeanspruchung zerstört und durch Perforierung aus der Wertkarte (1) entfernt wird.

2. Verfahren nach Anspruch 1 dadurch gekennzeichnet, dass die mechanische Überbeanspruchung des Mikrochips (5) unmittelbar vor der Entfernung aus der Wertkarte (1) vorgenommen und bei der Perforierung die Spur von Daten (3) mindestens durch eine Öffnung (6''') beschädigt wird.

3. Verfahren nach Anspruch 1 und 2 dadurch gekennzeichnet, dass mit der Entwertung der Wertkarten (1) die Aufbereitung des Kunstsoffanteils der Wertkarte (1) zur Wiederverwertung für die Kreislaufwirtschaft durch Fraktionierung der entstehenden Teile vollzogen wird.

4. Vorrichtung für die Durchführung des Verfahrens nach den Ansprüchen 1 und 2 dadurch gekennzeichnet, dass für die mechanische Überbeanspruchung des Mikrochips (5) und für die Perforierung der Wertkarte (1) ein Stanzwerkzeug verwendet wird, das mindestens aus einem Stempel (7) mit mindestens einem Dorn (9) und einer Matrize (12) mit einem Schlitz (13) für die Aufnahme der Wertkarte (1) besteht und dass der Dorn (9) an seinem vorragenden Ende eine Spitz (10) zum andrücken des Mikrochips (5) aufweist.

5. Vorrichtung nach Anspruch 3 dadurch gekennzeichnet, dass die vorragenden Enden der Dorne (8'-8''',9) hohlgeschliffen und die Länge der Dorne (8'-8''',9) abgestuft und die Lage des Schlitzes (13) für die Aufnahme der Wertkarte (1) gegenüber der Dorne (8'-8''',9) nicht senkrecht, sondern schräg ist, so dass die Perforation der Ausschnitte (4 und 6'-6''') und das Andrücken des Mikrochips (5) bei der Schliessung der Vorrichtung in serieller Reihenfolge geschieht.

6. Vorrichtung nach den Ansprüchen 4 und 5 dadurch gekennzeichnet, dass die Vorrichtung mit einer Presse, vorzugsweise mechanischer Kniehebelpresse (15) vorgenommen wird.

7. Vorrichtung nach den Ansprüchen 4 bis 6 dadurch gekennzeichnet, dass die Vorrichtung elektromechenisch, mit einem Elektroantrieb (20) und vorzugsweise mit einem Stirnradgetriebe (21), sowie Exzentern (22',22'') vorgenommen wird.

8. Vorrichtung nach den Ansprüchen 4 bis 7 dadurch gekennzeichnet, dass der Stempel (7) der Vorrichtung in den Stempeln (7' und 7'') unterteilbar und die Transmission des Antriebes der Exzenter (22',22") durch die Verschiebung des Ritzels (23) teilbar ist.

9. Vorrichtung nach den Ansprüchen 4 bis 8 dadurch gekennzeichnet, dass die Zurückstellung des Stempels (7) oder der Stempel (7',7'') durch die Federn (11',11'') vorgenommen wird.

10. Vorrichtung nach den Ansprüchen 4 bis 9 dadurch gekennzeichnet, dass die Vorrichtung vorzugsweise über einem Schrank (16) mit Schublade (17) verfügt, und dass die Schublade zur Fraktionierung der Auschnitte unterteilt und zum Ausziehen mit einem Griff (18) versehen ist.
